# EUROPÄISCHE PATENTANMELDUNG

(11) **EP 2 210 662 A2**
(43) Veröffentlichungstag der Anmeldung: **28.07.2010**
(21) Anmeldenummer: 10000263.3
(22) Anmeldetag: 13.01.2010
(51) Int. Cl.: B01J 20/286, B01J 20/32

(54) **Verfahren zur Herstellung von Adsorbentien für die Flüssigchromatographie mittels zwitterionischer Silane**

(30) Priorität: 23.01.2009 DE 102009006007
(71) Anmelder: AXAGARIUS GmbH & Co. KG, 52355 Düren (DE)
(72) Erfinder: John, Markus, D-59609 Anröchte (DE); Radmacher, Edmund, D-52349 Düren (DE); Möller, Klaus, D-52249 Eschweiler (DE)
(74) Vertreter: Albrecht, Ralf

(57) **Zusammenfassung**

Die vorliegende Erfindung betrifft ein Verfahren zur Herstellung von mit zwitterionischen Silanen modifizierten Adsorbentien für die Flüssigchromatographie, ein Adsorbens, das nach diesem Verfahren hergestellt ist, eine Chromatographiesäule, die ein solches Adsorbens enthält sowie schließlich die Verwendung einer derartigen Chromatographiesäule für die Flüssigchromatographie.

## Beschreibung

Die vorliegende Erfindung betrifft ein Verfahren zur Herstellung von mit zwitterionischen Silanen modifizierten Adsorbentien für die Flüssigchromatographie, ein Adsorbens, das nach diesem Verfahren hergestellt ist, eine Chromatographiesäule, die ein solches Adsorbens enthält sowie schließlich die Verwendung einer derartigen Chromatographiesäule für die Flüssigchromatographie.

Im Bereich der Flüssigchromatographie ist der Einsatz zwitterionischer Adsorbentien, also solcher Austauschphasen, die sowohl negativ als auch positiv geladene funktionelle Gruppen aufweisen, für die chromatographische Trennung hydrophiler Verbindungen bekannt.

Zur Herstellung dieser Adsorbentien werden im Stand der Technik unterschiedliche Wege beschritten. So wird in der Veröffentlichung von Tramosch, W.G.; Weber, S.G.; J. Chrom, 1990, 544, 113-123 eine Methode beschrieben, wonach eine stufenweise Modifizierung von Adsorbentien mit Aminosilanen, gefolgt von einer Umsetzung mit sulfonsäuretragenden Verbindungen und der anschließenden Quarternisierung der Aminofunktionen vorgenommen wird. Ein ähnlicher Weg ist in der Veröffentlichung Yu, L.W.; Hartwick, R.A.; J. Chromatrogr. Sci. 1989, 176-185 beschrieben. Bei beiden genannten Methoden gelangt man zu Adsorbentien mit zwitterionischem Charakter, die keinen exakten Ladungsausgleich aufweisen, mit anderen Worten eine unterschiedliche Zahl positiv und negativ geladener Gruppen tragen, was als nachteilig empfunden wird.

Wie sich bei den Arbeiten, die zu der vorliegenden Erfindung geführt haben, gezeigt hat, ist es problematisch, dass diese Adsorbentien beim Einsatz in Chromatographiesäulen zunächst wie ein Ionentauscher arbeiten, indem ein Teil der eigentlich mit Hilfe dieser Säule zu trennenden Substanzen zur Ladungsträgerkompensation an dem Trägermaterial über ionische Bindungen gebunden oder adsorbiert wird. Diese ionisch gebundenen bzw. adsorbierten Spezies lassen sich chemisch nur durch den Einsatz hochkonzentrierter Puffer von der Säule eluieren. Außerdem zeigen solche Säulen in den Chromatogrammen ein so genanntes "tailing", also keine scharfe Trennung der Substanzen.

In der US 7,238,426 B2 wird ein anderer Herstellprozess beschrieben, wonach ein zwitterionisches Adsorbens durch Pfropfcopolymerisation zwitterionischer Methacrylmonomere auf einem porösen Träger erhalten wird. Diese Methode erfordert jedoch eine zuvor durchzuführende, aufwendige Aktivierung der Trägeroberfläche mittels Chlorierung und Umsetzung mit Peroxiden. Diese Vorgehensweise ist nicht nur aufwendig, sondern beschränkt aufgrund der für die Oberflächenaktivierung eingesetzten aggressiven Chemikalien die Wahl der mit Hilfe dieses Verfahrens modifizierbaren Trägermaterialien.

Es besteht somit nach wie vor der Bedarf nach einem einfach durchzuführenden Herstellverfahren für zwitterionische Adsorbentien mit einer ausgeglichen Ladungsträgerbilanz zum Einsatz für die Flüssigchromatographie.

Die Aufgabe der vorliegenden Erfindung wird darin gesehen, ein Verfahren zur Herstellung von zwitterionischen Adsorbentien für die Flüssigchromatographie bereit zu stellen, das einerseits auf einer Vielzahl von Trägermaterialien für die Säulenchromatographie angewendet werden kann und das zu einem Adsorbens mit zwitterionischem Charakter führt, das eine nahezu ausgeglichene Anzahl positiver und negativer Ladungsträger aufweist.

Diese Aufgabe wird durch ein Verfahren gelöst, das die folgenden Schritte umfasst:
a) Umsetzen einer Silanverbindung der allgemeinen Formel I 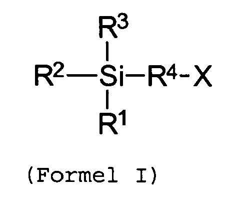 mit entweder einer Sulfonsäureverbindung der allgemeinen Formel II 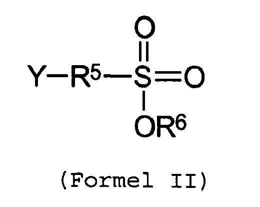 oder mit einer Sulfonsäureverbindung der allgemeinen Formel III 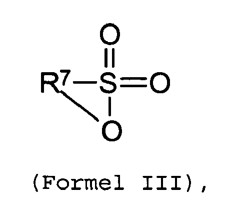 wobei R¹, R² und R³ gleich oder verschieden, substituierte oder unsubstituierte Alkoxy-, Aralkoxy-, Alkyl- oder Alkenylgruppen mit 1-20 C-Atomen oder Halogenid,
   R⁴ und R⁵ gleich oder verschieden, substituierte oder unsubstituierte Alkylen- oder Alkenylengruppen mit 1-20 C-Atomen oder Arylengruppen mit 6-20 C-Atomen,
   R⁶ Wasserstoff, eine substituierte oder unsubstituierte Alkyl- oder Alkenylgruppe mit 1-20 C-Atomen oder eine Arylengruppe mit 6-20 C-Atomen,
   R⁷ eine substituierte oder unsubstituierte Alkylen- oder Alkenylengruppe mit 2-20 C-Atomen bedeutet,
   wobei bei der Umsetzung der Silanverbindung der allgemeinen Formel I mit der Sulfonsäureverbindung der allgemeinen Formel II X oder Y eine primäre, sekundäre oder tertiäre Aminogruppe ist und die jeweils andere Gruppe, ein Halogenid oder Oxiran bedeutet und
   bei der Umsetzung der Silanverbindung der allgemeinen Formel I mit der Sulfonsäureverbindung der allgemeinen Formel III X eine primäre, sekundäre oder tertiäre Aminogruppe bedeutet;
b) Umsetzung des Reaktionsprodukts aus Schritt a) mit einem festen Träger, der ausgewählt ist aus polymeren oder anorganischen Trägern.

Der vorliegenden Erfindung liegt die zur Erfindung gehörende Erkenntnis zugrunde, dass durch die in einem ersten Schritt vorgenommene Herstellung eines zwitterionischen Silans und der erst danach durchgeführten Ankopplung an einen festen Träger auf aufwendige Aktivierungsschritte des Trägermaterials weitestgehend verzichtet werden kann, wodurch nahezu sämtliche im Bereich der Flüssigchromatographie einsetzbaren Trägermaterialien eingesetzt werden können. Die Ankopplung an den festen Träger kann mittels koordinativer, ionischer oder bevorzugt in Form kovalenter Bindungen erfolgen.

Die erfindungsgemäße Führung des Herstellungsprozesses liefert ferner ein Adsorbens mit zwitterionischem Charakter, das eine nahezu ausgeglichene Ladungsträgerbilanz aufweist, also makroskopisch gesehen eine nahezu gleiche Anzahl negativer und positiver Ladungsträger aufweist. Dies ist von Vorteil, weil die mit Hilfe der erfindungsgemäß hergestellten Adsorbentien erhältlichen Flüssigchromatographiesäulen eine gute Trennwirkung besitzen und bei der Wahl geeigneter Chromatographiebedingungen nahezu kein "tailing" im Chromatogramm zeigen, also keine Schwanzbildung bei den Peaks der detektierten Substanzen zu längeren Retentionszeiten. Auf diese Weise können auch Substanzen mit eng beieinander liegenden Retentionszeiten noch sauber voneinander getrennt werden.

Die Umsetzung der Silanverbindung der allgemeinen Formel I mit der Sulfonsäureverbindung der allgemeinen Formel II oder III kann in Substanz oder auch unter Verwendung eines Lösungsmittels durchgeführt werden, beispielsweise in Toluol. Die Reaktion kann, je nach Reaktivität der Reaktanden, bereits bei Raumtemperatur erfolgen oder aber auch bei erhöhter Temperatur von beispielsweise 70°C oder 80°C.

Die Umsetzung des Reaktionsprodukts aus Schritt a) mit dem festen Träger kann in der Art erfolgen, dass das Reaktionsprodukt aus dem Schritt a) nach gegebenenfalls zuvor durchgeführter Aufreinigung in einem Lösungsmittel mit dem Träger gemischt wird. Auch hier kann zur Erhöhung der Reaktionsgeschwindigkeit erwärmt werden und/oder die Zugabe eines Katalysators vorgenommen werden, beispielsweise einer Base wie n-Butylamin.

Das erfindungsgemäße Verfahren sieht im Schritt a) die Umsetzung eines Silans der allgemeinen Formel I in einer ersten Alternative mit einer Sulfonsäureverbindung der allgemeinen Formel II vor. Hierbei reagieren zunächst die beiden Gruppen X und Y miteinander, wobei erfindungsgemäß X oder Y eine primäre, sekundäre oder tertiäre Aminogruppe ist und die jeweils andere Gruppe, ein Halogenid oder Oxiran bedeutet.

Für die Konstellation, dass X eine Di-Methylaminogruppe darstellt und Y ein Chlorid, führt die Umsetzung eines entsprechenden Silans der Formeln I mit einer Sulfonsäure der allgemeinen Formel II, d.h. R⁶ = Wasserstoff, unter Abspaltung von Chlorwasserstoff zu einem zwitterionischen Silan der allgemeinen Formel IV: 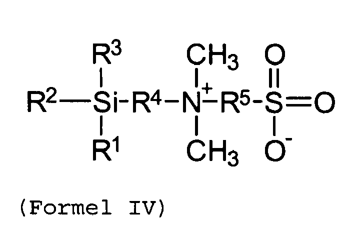 oder allgemein nach Abspaltung des Substituenten R⁶ beispielsweise durch eine Base zu einem zwitterionischen Reaktionsprodukt der allgemeinen Formel V:

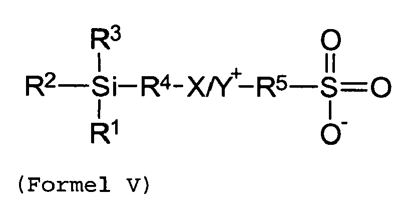

Hierbei bedeutet X/Y, dass je nachdem, welcher der beiden Substituenten X und Y für eine Aminogruppe steht, diese jeweilige Gruppe in dem Umsetzungsprodukt enthalten ist, wohingegen die jeweils andere Gruppe abgespalten wird. Im Falle, dass X bzw. Y eine primäre oder sekundäre Aminogruppe darstellen, kann diese entweder vor oder auch nach der Umsetzung in an sich bekannter Weise quarternisiert werden. Ebenfalls kann die Quarternisierung der Aminogruppe nach der Ankopplung an den festen Träger erfolgen.

Die erfindungsgemäß vorgesehene Alternative betrifft im Schritt a) des erfindungsgemäßen Verfahrens die Umsetzung eines Silans der allgemeinen Formel I mit einer zyklischen Sulfonsäureverbindung der allgemeinen Formel III. Bei dieser Alternative ist erfindungsgemäß vorgesehen, dass die Gruppe X der Verbindung der allgemeinen Formel I eine primäre, sekundäre oder tertiäre Aminogruppe darstellt, die mit der Baugruppe R⁷ der Sulfonsäureverbindung der allgemeinen Formel III unter Ringöffnung reagiert. Im Falle, dass X eine primäre oder sekundäre Aminogruppe darstellen, kann diese Gruppe entweder vor oder nach der Umsetzung mit der Verbindung der allgemeinen Formel III quarternisiert werden oder aber auch nach der Ankopplung an den festen Träger.

Für die Konstellation, dass X eine Di-Methylaminogruppe darstellt und R⁷ eine Propylengruppe führt die Umsetzung zu einem zwitterionischen Reaktionsprodukt der allgemeinen Formel VI: 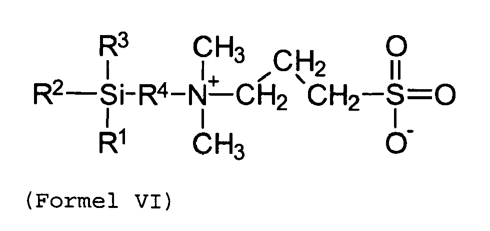 oder allgemein nach Abspaltung des Substituenten R⁶ beispielsweise durch eine Base zu einem zwitterionischen Reaktionsprodukt der allgemeinen Formel VII:

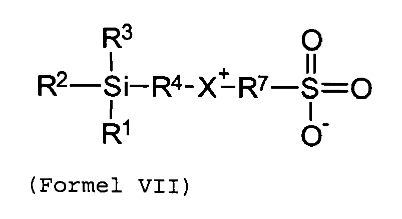

Nach einer Weiterbildung des erfindungsgemäßen Verfahrens sind R¹, R² und R³ gleich oder verschieden und bedeuten Chlorid, Bromid, substituierte oder unsubstituierte Alkoxy-, Aralkoxy-, Alkyl- oder Alkenylgruppen mit 1-6 C-Atomen. Besonders bevorzugt sind R¹, R² und R³ gleich oder verschieden und ausgewählt aus Methyl-, Ethyl-, Methoxy- und Ethoxygruppen. Dies ist besonders vorteilhaft, da auf diese Weise die Reaktivität des Silans in Bezug auf die Umsetzung mit dem Trägermaterial im Schritt b) des erfindungsgemäßen Verfahrens angepasst werden kann. Insbesondere kurzkettige Substituenten am Siliziumatom wie Methyl-, Ethyl-, Methoxy- oder Ethoxygruppen führen zu einer ausreichenden Reaktivität des zwitterionischen Umsetzungsprodukts aus Schritt a), so dass eine gesonderte Aktivierung des Trägermaterials vor der Umsetzungsreaktion im Verfahrensschritt b) nicht erforderlich ist.

Nach einer weiteren Ausführungsform des erfindungsgemäßen Verfahrens sind R⁴ und R⁵ gleich oder verschieden und stehen für substituierte oder unsubstituierte Alkylen- oder Alkenylengruppen mit 1-6 C-Atomen, insbesondere für Methylen-, Ethylen-, lineare Propylen- oder Butylengruppen. Dies ist besonders vorteilhaft, da auf diese Weise zum einen der Abstand zwischen der als Ankergruppe für den festen Träger fungierenden Silangruppe zur positiv geladenen Ammoniumgruppe über die Kettenlänge des Restes R⁴ eingestellt werden kann. Zum anderen kann über die Kettenlänge des Restes R⁵ der Abstand der beiden Ladungsträger Ammoniumgruppe und Sulfonatgruppe innerhalb des Reaktionsprodukts, also des zwitterionischen Silans, voneinander eingestellt werden. Damit lassen sich insbesondere mit Hilfe der oben genannten Gruppen auch die Trennungseigenschaften einer mit einem solchen Adsorbens ausgerüsteten Flüssigchromatographiesäule steuern.

Das erfindungsgemäße Verfahren kann weiterhin vorsehen, dass der Rest R⁶ Wasserstoff, eine Methyl- oder Ethylgruppe bedeutet. Diese Substituenten sind besonders bevorzugt, da sie sich leicht beispielsweise durch Basenzusatz von der Sulfonatgruppe trennen lassen, um dieser Gruppe die für die zwitterionischen Eigenschaften erforderliche negative Ladung zu verleihen.

Im Rahmen des erfindungsgemäßen Verfahrens kann des weiteren vorgesehen sein, dass R⁷ eine substituierte oder unsubstituierte Alkylen- oder Alkenylengruppe mit 2-6 C-Atomen bedeutet, insbesondere eine lineare Propylen- oder Butylengruppe. Diese Substituenten ermöglichen es, über die Kettenlänge des Restes R⁷ den Abstand der beiden Ladungsträger, also der Ammoniumgruppe und der Sulfonatgruppe voneinander einzustellen, um hierdurch beispielsweise die Trennungseigenschaften einer mit einem solchen Adsorbens ausgerüsteten Flüssigchromatographiesäule in gewünschter Weise zu beeinflussen.

Eine weitere Ausführungsform des erfindungsgemäßen Verfahrens zeichnet sich dadurch aus, dass X oder Y eine Gruppe der allgemeinen Formel VIII darstellt 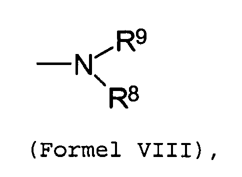 wobei R⁸ und R⁹ gleich oder verschieden, substituierte oder unsubstituierte Alkylgruppen mit 1-6 C-Atomen bedeuten, insbesondere Methyl-, Ethyl-, Propyl- oder Butylgruppen. Mit Hilfe dieser Substituenten der Aminogruppe lassen sich die die Trennungseigenschaften einer mit einem solchen Adsorbens ausgerüsteten Flüssigchromatographiesäule ebenfalls in gewünschter Weise beeinflussen. Außerdem kann auf diese Weise die Reaktivität der Aminogruppe in Bezug auf die im Schritt a) des erfindungsgemäßen Verfahrens beschriebene Umsetzung gesteuert werden.

Nach einer bevorzugten Ausführungsform des erfindungsgemäßen Verfahrens wird der feste Träger aus silikatischen Trägern, insbesondere Kieselgel, Titandioxid, Aluminiumoxid oder einem polymerbasierten Harz wie einem Polystyrol-, Polystyrol/ Divinylbenzol-, Polyvinylalkoholharz, einem Polymethyl(meth)acrylatbasierten Harz oder Mischungen von diesen ausgewählt. Wegen der milden Reaktionsbedingungen des erfindungsgemäßen Verfahrens können somit die festen Träger an die gewünschten Eigenschaften des Packmaterials für die Chromatographiesäule angepasst werden.

Die im Rahmen des erfindungsgemäßen Verfahrens einsetzbaren festen Träger können prinzipiell jede für Chromatographieanwendungen mögliche Struktur oder Form aufweisen. Als besonders geeignet haben sich feste Träger in partikulärer Form erwiesen, die eine Partikelgröße von 1 - 200 µm aufweisen, insbesondere von 2 bis 150 µm. Die Teilchengröße kann beispielsweise mittels eines Rasterelektronenmikroskops ermittelt werden.

Die einsetzbaren festen Träger haben typischerweise eine stark erhöhte spezifische Oberfläche. Diese wird üblicherweise über die BET-Adsorptionsmethode (Brunauer/ Emmett/ Teller) bestimmt. Als besonders geeignet haben sich feste Träger mit einer spezifische Oberfläche von 10 bis 800 m²/g herausgestellt, insbesondere von mehr als 100 m²/g.

Die im Rahmen des erfindungsgemäßen Verfahrens einsetzbaren festen Träger können eine poröse Struktur haben. In diesem Falle haben sich solche Träger als besonders zweckmäßig erwiesen, die ein spezifisches Porenvolumen von 0,1 - 5,0 ml/g aufweisen. Dieses Porenvolumen wird beispielsweise mittels Quecksilberporosimetrie nach DIN 66133 ermittelt. Bei der Messung des spezifischen Porenvolumens nach der Quecksilberporosimetrie wird die in die Probe eingedrungene Menge an Quecksilber ermittelt und der dazu benötigte Druck. Mittels dieser Daten wird anhand der bekannten Kapillarkräfte des Quecksilbers das Porenvolumen und Porengröße bestimmt.

Ferner zeichnen sich als im Rahmen des erfindungsgemäßen Verfahrens bevorzugt einsetzbare feste Träger durch eine mittlere Porenweite von 1 - 200 nm aus.

Es kann im Rahmen des erfindungsgemäßen Verfahrens vorgesehen werden, dass das Reaktionsprodukt gemäß Schritt a) des erfindungsgemäßen Verfahrens vor der Umsetzung mit dem festen Träger einem Reinigungsschritt unterzogen wird. In hierfür vorteilhafter Weise wird für die Umsetzung gemäß Schritt a) ein Lösungsmittel gewählt, in dem zwar die Reaktanden, nicht aber das Reaktionsprodukt löslich ist. Das hierdurch während der Reaktion ausfallende Reaktionsprodukt kann dann leicht über einen Filter abgetrennt und gewaschen werden, um dann anschließend mit dem festen Träger gemäß Verfahrensschritt b) umgesetzt zu werden.

Nach einer weiteren bevorzugten Ausführungsform des erfindungsgemäßen Verfahrens wir die Umsetzung des Reaktionsprodukts aus Verfahrensschritt a), also des zwitterionischen Silans, mit der festen Phase unter Anwesenheit einer Base, insbesondere einer organischen Base durchgeführt. Bevorzugt wird die Umsetzung in einem Lösungsmittel durchgeführt, in dem das zwitterionische Silan löslich ist. Die Zugabe einer Base ist besonders bevorzugt, da auf diese Weise die Reaktion der Silangruppe mit dem festen Träger beschleunigt wird, ohne dass zu viele Nebenprodukte entstehen. Für diese Zwecke besonders geeignete Basen sind beispielsweise n-Butylamin, n-Propylamin, Piperidin, Pyridin oder 4-N,N-Dimethylaminopyridin.

Ein weiterer Gegenstand der vorliegenden Erfindung ist ein zwitterionisches Adsorbens für die Flüssigchromatographie, das nach dem erfindungsgemäßen Verfahren hergestellt ist. Ein solches Adsorbens zeichnet sich insbesondere durch eine nahezu identische Anzahl gebundener positiver und negativer Ladungsträger aus. Die chromatographische Trennleistung eines solchen Adsorbens beim Einsatz in einer Chromatrographiesäule ist daher besonders hoch.

Ein besonders vorteilhaftes erfindungsgemäßes Adsorbens zeichnet sich dadurch aus, dass das Produkt der Umsetzung einer Silanverbindung der allgemeinen Formel I mit einer Sulfonsäureverbindung der allgemeinen Formel II oder III kovalent an den festen Träger gebunden ist. Auf diese Weise kann nämlich die Verbindung, die dem Adsorbens den zwitterionischen Charakter verleiht, nicht ohne weiteres von dem festen Träger entfernt werden. So kann eine Störung der Chromatographie durch abgespaltene Reaktionsprodukte vermieden werden. Außerdem können mit Hilfe eines solchen Adsorbens auch chromatographische Trennungen über einen breiteren pH-Bereich des Eluens vorgenommen werden, da die zwitterionischen Verbindungen aufgrund ihrer kovalenten Anbindung an den Träger nicht so ohne weiteres ablösbar sind.

Gemäß einer weiteren Ausführungsform des erfindungsgemäßen Adsorbens beträgt die Belegungsdichte des festen Trägers mit dem Reaktionsprodukt der Silanverbindung der allgemeinen Formel I mit der Sulfonsäureverbindung der allgemeinen Formel II oder III 0,1 bis 8 µmol/m². Dies ist besonders vorteilhaft, da ein solches Adsorbens beim Einsatz in Chromatographiesäulen gute Trenneigenschaften aufweist.

Eine Weiterbildung der vorliegenden Erfindung besteht ferner in einem erfindungsgemäßen Adsorbens, bei dem das Verhältnis zwischen kationischen und anionischen Gruppen des Adsorbens von 0,9 bis 1,1, insbesondere von 0,95 bis 1,05 beträgt. Ganz besonders bevorzugt liegt das Verhältnis zwischen kationischen und anionischen Gruppen des Adsorbens bei etwa 1. Das bedeutet, dass das entsprechende Adsorbens eine nahezu ausgeglichene Ladungsträgerbilanz mit nahezu gleichen Anteilen an gebundenen positiven und negativen Ladungen bzw. Ladungsträgern aufweist. Dies ist besonders vorteilhaft, weil auf diese Weise das Adsorbens bei der Verwendung in Chromatographiesäulen nahezu keine Ionentauschereigenschaften zeigt. Derartige Chromatographiesäulen zeichnen sich außerdem durch eine gute Trennleistung aus und zeigen nahezu kein "tailing" bei den Substanzpeaks im Chromatogramm.

Die Bestimmung der Ladungsträgerbilanz kann beispielsweise indirekt über die Bestimmung des Schwefel- und des Stickstoffgehalts erfolgen. Jedes Mol an atomarem Stickstoff entspricht gemäß den Formeln V bzw. VII jeweils einem Mol an positiven Ladungsträgern, da jede Aminogruppe der jeweiligen Verbindung jeweils eine positive Ladung trägt. In hierzu analoger Weise ist auch die Schwefelmenge gemäß den Formeln V bzw. VII direkt proportional zur Anzahl der negativen Ladungsträger, da jede Sulfonsäuregruppe im deprotonierten Zustand eine negative Ladung trägt. Der Schwefel- bzw. Stickstoffgehalt wurde mittels thermischer Zersetzung (Elementaranalyse) bestimmt. Hierzu wurde der Elementaranalysator vario EL der Firma Elementar Analysensysteme GmbH, Hanau eingesetzt.

Ein weiterer Gegenstand der vorliegenden Erfindung betrifft eine Chromatographiesäule für die Flüssigchromatographie, die ein erfindungsgemäßes zwitterionisches Adsorbens enthält. Zur Herstellung einer solchen Chromatographiesäule kann auf an sich bekannte Weise eine Röhre für die Flüssigchromatographie mit dem erfindungsgemäßen Adsorbens befüllt werden.

Schließlich betrifft die Erfindung noch die Verwendung einer erfindungsgemäßen Chromatographiesäule für die Flüssigchromatographie, insbesondere für die Flüssigchromatographie von hydrophilen Verbindungen. Dies ist besonders vorteilhaft, da die erfindungsgemäßen Chromatographiesäulen aufgrund ihrer nahezu gleichen Anzahl positiver und negativer Ladungsträger polare Flüssigkeiten und insbesondere hydrophile Verbindungen besonders gut chromatographisch trennen können.

Die vorliegende Erfindung wird im Folgenden anhand von Ausführungsbeispielen näher ausgeführt und die Eigenschaften der erfindungsgemäßen Chromatographiesäulen bzw. der erfindungsgemäß hergestellten Adsorbentien anhand von Chromatogrammen dargelegt.

### Beispiel 1: Herstellung eines zwitterionischen Silans:

Zu 5 g 3-(N,N-Dimethylamino-)propylmethyldimethoxysilan werden unter Rühren 3,6 g 1,3-Propansulton, gelöst in 40 ml Toluol, getropft. Die Lösung wird nun 1,5 h bei 100°C gerührt. Das Reaktionsprodukt fällt hierbei als Salz aus.
Das Reaktionsprodukt wird mittels einer Glasfilternutsche abfiltriert und mit 500 ml Toluol gewaschen. Abschließend wird der weiße Feststoff bei 60°C 12 Stunden getrocknet.

### Beispiel 2: Herstellung eines zwitterionischen Silans:

Zu 5 g 3-Brompropylmethyldimethoxysilan werden unter Rühren 4 g 3-N,N-Dimethylaminopropansulfonsäure, gelöst in 45 ml Methanol/Wasser (1:1), getropft. Der pH-Wert des Wassers wird zuvor mittels Kaliumhydroxidplätzchen auf 8 eingestellt. Die Lösung wird bei 150°C 8 h gerührt. Das Reaktionsprodukt wird mittels einer Glasfilternutsche abfiltriert und mit 100 ml Isopropanol und 300 ml Toluol gewaschen. Abschließend wird der Feststoff bei 60°C 12 Stunden getrocknet.

### Beispiel 3: Herstellung eines zwitterionischen Silans:

Zu 5 g 3-(N,N-Dimethylamino-)propylmethyldimethoxysilan werden unter Rühren 6 g 3-Brompropylsulfonsäure, gelöst in 60 ml Methanol/Wasser (1:1), getropft. Der pH-Wert des Wassers wird zuvor mittels Kaliumhydroxidplätzchen auf 8,5 eingestellt. Die Lösung wird nun 17 h bei 100°C gerührt. Das Reaktionsprodukt wird mittels einer Glasfilternutsche abfiltriert und mit 100 ml Isopropanol und 300 ml Toluol gewaschen. Abschließend wird der Feststoff bei 60°C 12 Stunden getrocknet.

### Beispiel 4 (Vergleichsbeispiel) Herstellung eines zwitterionischen Packungsmaterials gemäß dem Stand der Technik:

Zum Vergleich mit den erfindungsgemäß hergestellten Adsorbentien wurde ein Adsorbens wie in Tramosch, W.G.; Weber, S.G.; J. Chrom, 1990, 544, 113-123 bzw. Yu, L.W.; Hartwick, R.A.; J. Chromatrogr. Sci. 1989, 176-185 beschrieben, hergestellt. Hierzu wurden zunächst 10 g eines silikatischen Trägers (NUCLEODUR 100-7 der MACHEREY-NAGEL GmbH & Co. KG) in 50 ml Toluol vorgelegt und mit 5 g 3-N,N-Dimethylaminopropylmethyldimethoxysilan versetzt. Anschließend werden 0,2 ml n-Butylamin hinzugegeben und der Ansatz 12 Stunden unter Rückfluss erhitzt. Nach Beendigung der Reaktionszeit wird der Ansatz auf eine Glasfilternutsche gegeben und mit 200 ml Toluol, 100 ml Methanol, 200 ml Wasser, 50 ml Methanol und 50 ml Dichlormethan gewaschen. Danach wird das Reaktionsprodukt 12 Stunden bei 60°C getrocknet.

Zu dem Reaktionsproduktes, das in 40 ml Toluol suspendiert wird, werden nun 3,6 g 1,3-Propansulton, gelöst in 40 ml Toluol, getropft. Der Ansatz wird bei 150°C über 16 h lang gerührt. Nach Ablauf dieser Zeitspanne wird der Ansatz mittels einer Nutsche abgetrennt und der Filterrückstand mit Methanol und heißem Wasser gewaschen. Nachfolgend wird der Ansatz mit jeweils 500 ml Methanol und Dichlormethan gewaschen.

### Beispiel 5: Herstellung des zwitterionischen Packungsmaterials:

Zum dem im Beispiel 1 hergestellten zwitterionischen Silan werden 10 g eines silikatischen Trägers (NUCLEODUR 100-7 der Macherey-Nagel GmbH & Co. KG) hinzu gegeben und die entstehende Suspension homogenisiert. Anschließend werden 0,2 ml n-Butylamin hinzugefügt. Der Ansatz wird bei 150°C über 16 h lang gerührt. Nach Ablauf dieser Zeitspanne wird der Ansatz mittels einer Nutsche abgetrennt und der Filterrückstand mit Methanol und heißem Wasser gewaschen. Nachfolgend wird der Ansatz mit jeweils 500 ml Methanol und Dichlormethan gewaschen. Abschließend wird der mit dem zwitterionischen Silan modifizierte silikatische Träger bei 60°C im Trockenschrank getrocknet.

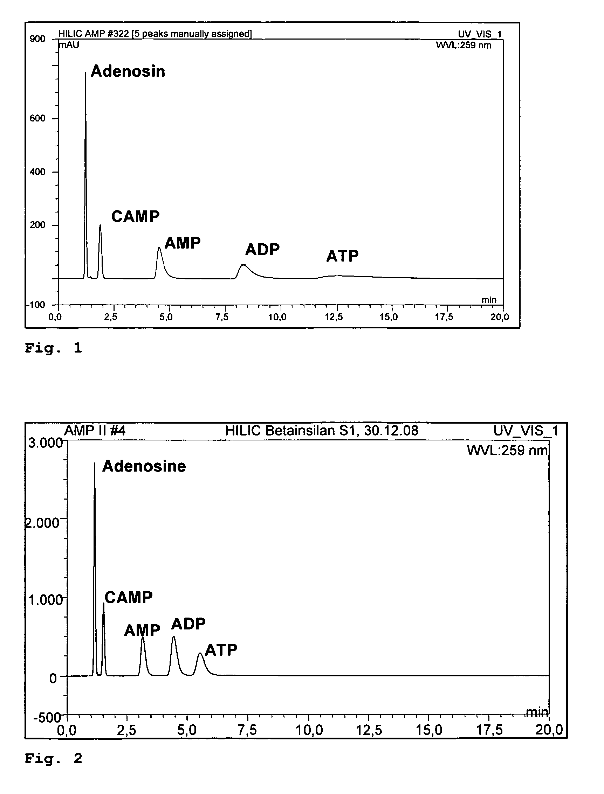

Die Fig. 1 und 2 zeigen Chromatogramme von Proben, die mittels Chromatographiesäulen mit den Packungsmaterialien gemäß den Beispielen 4 und 5 unter ansonsten identischen Chromatographiebedingungen erhalten wurden. Hierzu wurden Säulen mit einer Länge von 125 mm und einem Innendurchmesser von 4 mm an ein HPLC-Gerät der Firma DIONEX ULTIMATE 3000 Typ angeschlossen. Als Eluent wurde eine Mischung aus ACN/100 mM Ammoniumacetat (pH 5,33) bei einer Temperatur von 25°C und einer Flussrate von 1,3 ml/min verwendet. Die Detektion erfolgte mittels eines UV-VIS-Spektrometers bei einer Wellenlänge von 259 nm.

Aus den Figuren 1 und 2 wird die unterschiedliche Trennleistung des gemäß dem Stand der Technik hergestellten Adsorbens nach Beispiel 4 (Fig. 1) und dem erfindungsgemäß hergestellten Adsorbens nach Beispiel 5 (Fig. 2) deutlich. Die Peaks in dem in Fig. 2 dargestellten Chromatogramm sind schärfer und zeigen nahezu kein Tailing sondern eine enge, eher symmetrische Gauss-Verteilung. Demgegenüber zeigt das Chromatogramm in Fig. 1 zum einen eine insgesamt deutlich höhere Retentionszeit wobei die einzelnen Peaks insbesondere mit zunehmenden Retentionszeiten ein zunehmendes Tailing zeigen, wodurch sich erkennbar asymmetrische Gauss-Verteilungen ergeben. Der letzte Peak bei etwa 12 Minuten ist stark verbreitert und zieht sich über fast 5 Minuten Retentionsdauer hin.

### Beispiel 6: Herstellung des zwitterionischen Silanes:

Zu 5 g 3-Glycidoxypropyltrimethoxysilan (GLYMO) wird unter Rühren eine Lösung bestehend aus 50 ml 0,2 M Na₂HPO₄ und 4,43 g 3-(N-Morpholino)-propansulfonsäure (MOPS) gegeben. Die Mischung wird 6 h bei 100°C gerührt.

### Beispiel 7: Herstellung des zwitterionischen Packungsmaterials:

Zu dem im Beispiel 2 hergestellten zwitterionischen Silan werden 10 g NUCLEODUR 100-7 gegeben. Anschließend werden 0,2 ml n-Butylamin hinzugefügt. Der Ansatz wird bei 150°C (Heizplatte) 16 h gerührt. Danach wird der Ansatz auf die Nutsche gegeben und mit Methanol und heißem Wasser gewaschen. Nachfolgend wird mit jeweils 500 ml Methanol und Dichlormethan gewaschen. Die in der Saugflasche angefallene Waschlösung wird umgehend in einem Abfallbehälter entsorgt. Abschließend wird die Phase bei 60°C im Trockenschrank getrocknet.

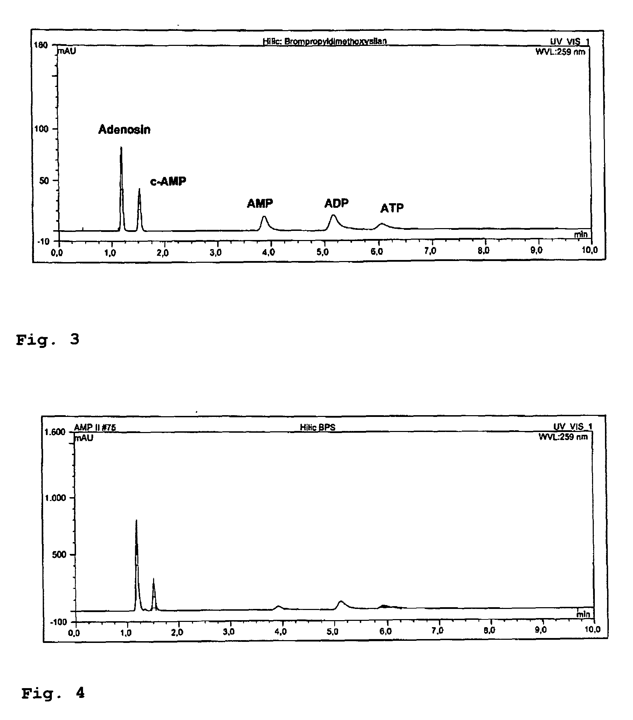

Die Fig. 3 zeigt die Trennleistung einer mit einem solchen Packungsmaterial ausgerüsteten Säule unter denselben Bedingungen wie für Beispiel 5, bzw. den Fig. 1 und 2 angegeben.

### Beispiel 8: Herstellung des zwitterionischen Packungsmaterials:

Zu dem im Beispiel 3 hergestellten zwitterionischen Silan werden 10 g NUCLEODUR 100-10 gegeben. Der Ansatz wird bei 100°C (Heizplatte) 16 h gerührt. Danach wird der Ansatz auf die Nutsche gegeben und mit Methanol und heißem Wasser gewaschen. Nachfolgend wird mit jeweils 500 ml Methanol und Dichlormethan gewaschen. Abschließend wird die Phase bei 60°C im Trockenschrank getrocknet.

Die Fig. 4 zeigt die Trennleistung einer mit einem solchen Packungsmaterial ausgerüsteten Säule unter denselben Bedingungen wie für Beispiel 5, bzw. den Fig. 1 und 2 angegeben.

### Beispiel 9: Herstellung des zwitterionischen Packungsmaterials:

Zu dem im Beispiel 6 hergestellten zwitterionischen Silan gibt man 10 g NUCLEODUR 100-7 (Spezifikationen s.o.) hinzu und homogensiert die Suspension. Anschließend werden 0,2 ml n-Butylamin hinzugefügt. Der Ansatz wird bei 150°C (Heizplatte) 16 h gerührt. Danach wird der Ansatz auf die Nutsche gegeben und mit Methanol und heißem Wasser gewaschen. Nachfolgend wird der Ansatz mit jeweils 500 ml Methanol und Dichlormethan gewaschen. Abschließend wird die Phase bei 60°C im Trockenschrank getrocknet.

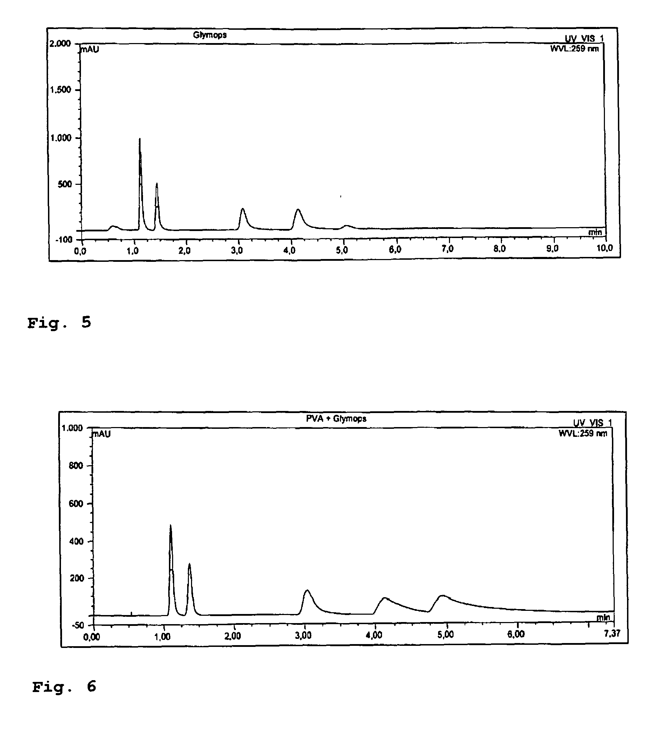

Die Fig. 5 zeigt die Trennleistung einer mit einem solchen Packungsmaterial ausgerüsteten Säule unter denselben Bedingungen wie für Beispiel 5, bzw. den Fig. 1 und 2 angegeben.

### Beispiel 10: Herstellung eines zwitterionischen Packungmaterials auf Polyvinylalkohol-Basis

Zu dem im Beispiel 6 hergestellten zwitterionischen Silan werden 1,56 g Natriumhydroxid gegeben. Zu dieser Lösung werden 8 g Polyvinylalkoholpartikel mit einer Partikelgröße von 5-8 µm gegeben. Die Herstellung dieser PolyvinylalkoholPartikel durch Suspension einer wäßrigen Polymerlösung ist in DE-OS 41 27 657 beschrieben. Der Ansatz wird bei 80°C 24 h gerührt, danach auf die Nutsche gegeben und mit Methanol und heißem Wasser gewaschen. Nachfolgend wird der Ansatz mit jeweils 500 ml Methanol und Dichlormethan gewaschen. Abschließend wird die Phase bei 60°C im Trockenschrank getrocknet.

Die Fig. 6 zeigt die Trennleistung einer mit einem solchen Packungsmaterial ausgerüsteten Säule unter denselben Bedingungen wie für Beispiel 5, bzw. den Fig. 1 und 2 angegeben.

### Beispiel 11: Herstellung eines zwitterionischen Packungmaterials auf Polyvinylalkohol-Basis

Zu dem im Beispiel 1 hergestellten zwitterionischen Silan werden 8 g Polyvinylalkoholpartikel wie in Beispiel 10 angegeben hinzugefügt. Anschließend werden 0,1 ml n-Butylamin hinzugefügt. Der Ansatz wird bei 80°C (Heizplatte) 24 h gerührt. Danach wird der Ansatz auf die Nutsche gegeben und mit Methanol und heißem Wasser gewaschen. Nachfolgend wird mit jeweils 500 ml Methanol und Dichlormethan gewaschen. Die in der Saugflasche angefallene Waschlösung wird umgehend in einem Abfallbehälter entsorgt. Abschließend wird die Phase bei 60°C im Trockenschrank getrocknet.

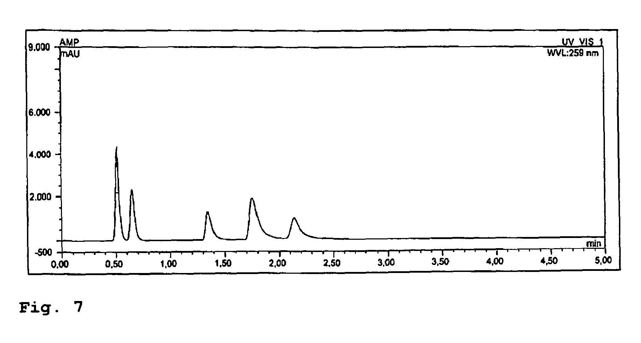

Die Fig. 7 zeigt die Trennleistung einer mit einem solchen Packungsmaterial ausgerüsteten Säule unter denselben Bedingungen wie für Beispiel 5, bzw. den Fig. 1 und 2 angegeben.

Die verwendeten Träger mit der Bezeichnung **NUCLEODUR 100-7 und 100-10** sind Produkte der Macherey-Nagel GmbH & Co. KG und bezeichnen silikatische Träger mit einer Porenweite von jeweils 100 Å, einer spezifischen Oberfläche von 330 -360 qm/g und Partikelgrößen von 7 (NUCLEODUR 100-7) bzw. 10 µm (NUCLEODUR 100-10).

## Patentansprüche

1. Verfahren zur Herstellung von zwitterionischen Adsorbentien für die Flüssigchromatographie, das die folgenden Schritte umfasst:
a) Umsetzen einer Silanverbindung der allgemeinen Formel I 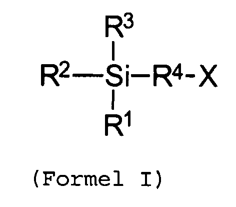 mit entweder einer Sulfonsäureverbindung der allgemeinen Formel II 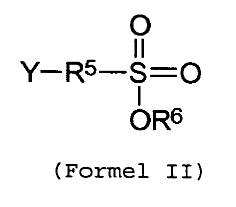 oder mit einer Sulfonsäureverbindung der allgemeinen Formel III 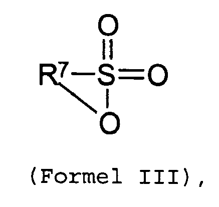 wobei R¹, R² und R³ gleich oder verschieden, substituierte oder unsubstituierte Alkoxy-, Aralkoxy-,
Alkyl- oder Alkenylgruppen mit 1-20 C-Atomen oder Halogenid,
R⁴ und R⁵ gleich oder verschieden, substituierte oder unsubstituierte Alkylen- oder Alkenylengruppen mit 1-20 C-Atomen oder Arylengruppen mit 6-20 C-Atomen,
R⁶ Wasserstoff, eine substituierte oder unsubstituierte Alkyl- oder Alkenylgruppe mit 1-20 C-Atomen oder eine Arylengruppe mit 6-20 C-Atomen,
R⁷ eine substituierte oder unsubstituierte Alkylen- oder Alkenylengruppe mit 2-20 C-Atomen bedeutet,
wobei bei der Umsetzung der Silanverbindung der allgemeinen Formel I mit der Sulfonsäureverbindung der allgemeinen Formel II X oder Y eine primäre, sekundäre oder tertiäre Aminogruppe ist und die jeweils andere Gruppe, ein Halogenid oder Oxiran bedeutet und
bei der Umsetzung der Silanverbindung der allgemeinen Formel I mit der Sulfonsäureverbindung der allgemeinen Formel III X eine primäre, sekundäre oder tertiäre Aminogruppe bedeutet;
b) Umsetzung des Reaktionsprodukts aus Schritt a) mit einem festen Träger, der ausgewählt ist aus polymeren oder anorganischen Trägern.

2. Verfahren nach Anspruch 1, **dadurch gekennzeichnet, dass** R¹, R² und R³ gleich oder verschieden, Chlorid, Bromid, substituierte oder unsubstituierte Alkoxy-, Aralkoxy-, Alkyl- oder Alkenylgruppen mit 1-6 C-Atomen bedeuten, insbesondere Methyl-, Ethyl-, Methoxy- oder Ethoxygruppen.

3. Verfahren nach Anspruch 1 oder 2, **dadurch gekennzeichnet, dass** R⁴ und R⁵ gleich oder verschieden, substituierte oder unsubstituierte Alkylen- oder Alkenylengruppen mit 1-6 C-Atomen bedeuten, insbesondere Methylen-, Ethylen-, lineare Propylen- oder Butylengruppen.

4. Verfahren nach einem der vorstehenden Ansprüche, **dadurch gekennzeichnet, dass** R⁶ Wasserstoff, eine Methyl- oder Ethylgruppe bedeutet.

5. Verfahren nach einem der vorstehenden Ansprüche, **dadurch gekennzeichnet, dass** R⁷ eine substituierte oder unsubstituierte Alkylen- oder Alkenylengruppe mit 2-6 C-Atomen bedeutet, insbesondere eine lineare Propylen- oder Butylengruppe.

6. Verfahren nach einem der vorstehenden Ansprüche, **dadurch gekennzeichnet, dass** X oder Y eine Gruppe der allgemeinen Formel VIII darstellt 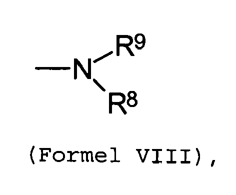 wobei R⁸ und R⁹ gleich oder verschieden, substituierte oder unsubstituierte Alkylgruppen mit 1-6 C-Atomen bedeuten, insbesondere Methyl-, Ethyl-, Propyl- oder Butylgruppen.

7. Verfahren nach einem der vorstehenden Ansprüche, **dadurch gekennzeichnet, dass** der feste Träger ausgewählt ist aus silikatischen Trägern, insbesondere Kieselgel, Titandioxid, Aluminiumoxid oder einem polymerbasierten Harz ausgewählt aus Polystyrol-, Polystyrol/ Divinylbenzol-, einem Polyvinylalkoholharz, einem Polymethyl(meth)- acrylatbasierten Harz oder Mischungen von diesen.

8. Verfahren nach einem der vorstehenden Ansprüche, **dadurch gekennzeichnet, dass** der feste Träger in partikulärer Form vorliegt und eine Partikelgröße von 1 - 200 µm und/ oder eine spezifische Oberfläche von 10 - 800 m²/g und/ oder ein spezifisches Porenvolumen von 0,1 - 5,0 ml/g und/ oder eine mittlere Porenweite von 1 - 200 nm aufweist.

9. Verfahren nach einem der vorstehenden Ansprüche, **dadurch gekennzeichnet, dass** die Umsetzung des Reaktionsprodukts aus Verfahrensschritt a) mit der festen Phase unter Anwesenheit einer Base, insbesondere einer organischen Base durchgeführt wird.

10. Zwitterionisches Adsorbens für die Flüssigchromatographie, hergestellt nach einem Verfahren gemäß einem der Ansprüche 1 bis 9.

11. Adsorbens nach Anspruch 10, **dadurch gekennzeichnet, dass** das Produkt der Umsetzung einer Silanverbindung der allgemeinen Formel I mit einer Sulfonsäureverbindung der allgemeinen Formel II oder III kovalent an den festen Träger gebunden ist.

12. Adsorbens nach Anspruch 10 oder 11, **dadurch gekennzeichnet, dass** die Belegungsdichte des festen Trägers mit dem Reaktionsprodukt der Silanverbindung der allgemeinen Formel I mit der Sulfonsäureverbindung der allgemeinen Formel II oder III 0,1 bis 8 µmol/m² beträgt.

13. Adsorbens nach einem der Ansprüche 10 bis 12, **dadurch gekennzeichnet, dass** das Verhältnis zwischen kationischen und anionischen Gruppen des Adsorbens 0,9 bis 1,1, insbesondere von 0,95 bis 1,05 beträgt.

14. Chromatographiesäule für die Flüssigchromatographie, enthaltend ein zwitterionisches Adsorbens gemäß einem der Ansprüche 10 bis 13.

15. Verwendung einer Chromatographiesäule nach Anspruch 14 für die Flüssigchromatographie, insbesondere für die Flüssigchromatographie von hydrophilen Verbindungen.
